## Europäisches Patentamt
## European Patent Office
## Office européen des brevets

(19)

(11) Numéro de publication: **0 033 568**
**B1**

(12)
# FASCICULE DE BREVET EUROPEEN

(45) Date de publication du fascicule du brevet:
**23.11.83**

(51) Int. Cl.³: **H 04 B 3/23**

(21) Numéro de dépôt: **81200087.5**

(22) Date de dépôt: **23.01.81**

(54) **Annuleur d'écho à circuits de calcul simplifiés.**

(30) Priorité: **01.02.80 FR 8002274**

(43) Date de publication de la demande:
**12.08.81 Bulletin 81/32**

(45) Mention de la délivrance du brevet:
**23.11.83 Bulletin 83/47**

(84) Etats contractants désignés:
**DE FR GB SE**

(56) Documents cités:
**FR - A - 2 377 734**

(73) Titulaire: **TELECOMMUNICATIONS RADIOELECTRIQUES ET TELEPHONIQUES T.R.T., 88, rue Brillat Savarin, F-75013 Paris (FR)**

(72) Inventeur: **Guidoux, Loic Bernard Yves, SOCIETE CIVILE S.P.I.D. 209, rue de l'Université, F-75007 Paris (FR)**

(74) Mandataire: **Tissot, Jean et al, Société Civile S.P.I.D. 209, rue de l'Université, F-75007 Paris (FR)**

## Annuleur d'écho à circuits de calcul simplifiés

L'invention concerne un annuleur d'écho associé à un modem de transmission de données utilisant la modulation de phase et d'amplitude d'une porteuse, cet annuleur d'écho comprenant des filtres adaptatifs qui reçoivent des signaux déduits du signal de données à transmettre, qui fournissent des signaux qui sont combinés pour former un signal d'écho synthétique et dont les coefficients sont réglés de façon itérative, à partir du signal de différence entre le signal reçu et le signal d'écho synthétique, pour rendre minimale la valeur quadratique moyenne du signal d'écho résiduel, présent dans ledit signal de différence.

On sait que lorsqu'un modem est couplé à une ligne de transmission à deux fils, il peut se produire intempestivement dans la voie réception de ce modem, une fraction du signal émis par la voie émission, par suite d'imperfections de la jonction hybride qui couple le modem à la ligne de transmission ou par suite de réflexions dans cette ligne de transmission. Un annuleur d'écho a pour but d'annuler ce signal intempestif ou signal d'écho qui apparaît dans la voie réception. L'avantage de cette opération d'annulation d'écho est de permettre une transmission simultanée entre deux modems reliés par une ligne de transmission à deux fils.

Un annuleur d'écho du genre spécifié ci-dessus est décrit dans le brevet français n° 2 377 734 complété par le certificat d'addition n° 2 394 938. Selon cet art antérieur, un annuleur d'écho comporte en principe autant de filtres numériques adaptatifs que d'états de phase distincts de la porteuse émise, chaque filtre adaptatif étant affecté à un état de phase déterminé. A chaque intervalle de modulation, un nombre correspondant à l'amplitude de la porteuse émise est appliqué à un filtre adaptatif correspondant à la phase de la porteuse émise, tandis que le nombre 0 est appliqué à tous les autres filtres. Dans la plupart des cas usuels de modulation, une moitié des phases de la porteuse émise diffère de 180° des autres phases et l'on peut diviser par deux le nombre de filtres adaptatifs, chaque filtre étant alors affecté à un état de phase $\psi$ et $\psi + 180°$ de la porteuse émise, tandis que les nombres correspondant à l'amplitude de la porteuse et appliqués à chaque filtre sont de façon correspondante affectés du signe + ou du signe −.

En utilisant cette technique connue, les filtres numériques adaptatifs ne sont simples à réaliser que lorsque l'on a affaire à la modulation de phase, sans modulation d'amplitude. Dans ce cas, les nombres appliqués à l'entrée de ces filtres se réduisent aux valeurs + 1, − 1 ou 0 et les circuits de multiplication par ces nombres, utilisés dans les filtres se réduisent à des circuits logiques très simples. Par contre, lorsque la porteuse est modulée à la fois en phase et en amplitude, les filtres numériques adaptatifs peuvent être compliqués à réaliser, particulièrement lorsque les niveaux d'amplitude de la porteuse ont entre eux des rapports «compliqués» tels que $1/3$ ou $\sqrt{2}$, ce qui est souvent le cas. Les filtres numériques doivent alors comporter des circuits de calculs pour effectuer des multiplications par ces nombres «compliqués».

Le but de l'invention est de fournir un annuleur d'écho dans lequel, quel que soit le type de modulation envisagé, les filtres numériques adaptatifs ne traitent que des signaux à valeurs + 1, − 1 ou 0, de façon que ces filtres puissent être réalisés de manière identique, avec des circuits de calculs très simples.

Conformément à l'invention, un annuleur d'écho comporte des moyens de transcodage qui reçoivent un signal caractérisant à chaque intervalle de modulation l'état de phase et d'amplitude de la porteuse à émettre et qui font correspondre aux états possibles distincts de la porteuse à émettre des configurations distinctes de plusieurs nombres de valeur + 1, − 1 ou 0, de façon à former plusieurs signaux élémentaires en moyenne indépendants entre eux, ces signaux élémentaires étant appliqués respectivement auxdits filtres adaptatifs.

Dans les cas pratiques de modulation, les états possibles de la porteuse peuvent être groupés par paires dans lesquelles deux états correspondent à la même amplitude et à deux phases différant de 180°. Dans ce cas, il est avantageux que, dans l'annuleur d'écho, les moyens de transcodage fassent correspondre à chaque paire d'états de la porteuse deux configurations de nombres ne différant que par le signe. On obtient alors une division par deux du nombre de filtres numériques adaptatifs nécessaire.

Dans l'annuleur d'écho de l'invention tous les filtres numériques adaptatifs traitent des signaux élémentaires formés de nombres simples + 1, − 1 ou 0. Ces filtres sont avantageusement identiques à un filtre de base dans lequel les circuits de multiplication par ces nombres + 1, − 1 ou 0, sont très simples à réaliser. Un annuleur d'écho conforme à l'invention peut être construit de façon modulaire à partir d'un filtre de base.

En outre, sans aucune modification, un annuleur d'écho conforme à l'invention peut s'adapter automatiquement à différents types de modulation utilisant le même nombre d'états de modulation.

Enfin, en changeant le branchement des filtres numériques adaptatifs, on peut adapter aisément l'annuleur d'écho au fonctionnement du modem à la vitesse normale et à la vitesse de repli, avec des performances accrues de l'annuleur d'écho à la vitesse de repli.

La description suivante en regard des dessins annexés, le tout donné à titre d'exemple, fera bien comprendre comment l'invention peut être réalisée.

La figure 1 représente la structure générale de l'annuleur d'écho de l'invention.

La figure 2 représente le schéma d'un filtre numérique adaptatif utilisé dans l'annuleur d'écho de la figure 1.

Les figures 3, 4, 5 et 7 sont des diagrammes représentant plusieurs types de modulation à 8 états.

La figure 6 représente un mode de réalisation du générateur d'écho synthétique dans le cas de la modulation à 8 états.

La figure 8 est un diagramme représentant un type de modulation à 16 états.

La figure 9 représente les branchements effectués pour adapter un annuleur d'écho à la vitesse de repli dans le cas où l'on utilise une modulation à 16 états à la vitesse normale et une modulation à 8 états à la vitesse de repli.

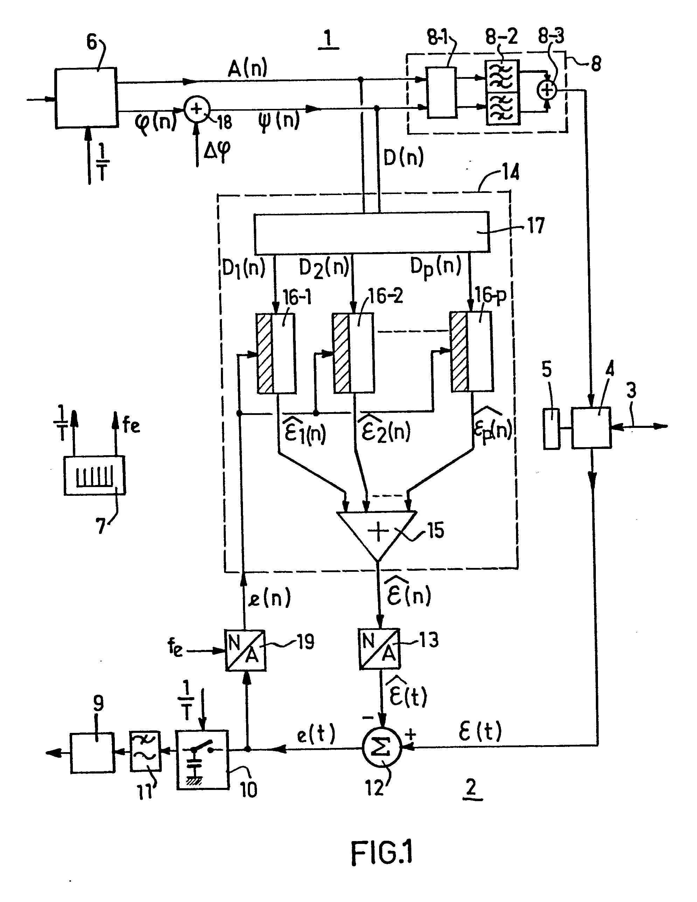

La figure 1 montre la structure générale de l'annuleur d'écho de l'invention associé à un modem dans lequel les données sont transmises par modulation de phase et d'amplitude d'une porteuse. Ce modem comporte une voie d'émission $\underline{1}$ et une voie de réception $\underline{2}$ qui sont connectées à une ligne de transmission bidirectionnelle 3 par l'intermédiaire d'une jonction hybride 4, à laquelle est également connectée une impédance d'équilibrage 5.

On suppose à titre d'exemple que pour transmettre les données, on effectue dans la voie émission $\underline{1}$ une modulation de type numérique, du genre de la modulation d'échos, décrit dans l'article de Croisier et Pierret, intitulé «The digital echo modulation» et paru dans IEEE Trans. Comm. Vol. COM 18, n° 4, Août 1970, pages 367-376. Sous la forme simplifiée représentée, la voie émission $\underline{1}$ comporte alors un circuit de codage 6 recevant les données à transmettre et fournissant une paire de signaux représentatifs des amplitudes A(n) et des changements de phases $\varphi(n)$ à attribuer à la porteuse en fonction des données, à des instants nT déterminés par le générateur 7 de la fréquence d'horloge $1/_T$. Pour tenir compte de la variation de phase $\Delta\varphi$ de la porteuse pendant chaque intervalle de modulation T, on utilise un circuit additionneur 18 pour former à chaque instant nT la somme $\varphi(n) + \Delta\varphi$ qui est représentative de la phase absolue $\psi(n)$ de la porteuse modulée à émettre. On suppose que les phases absolues possibles $\psi(n)$ diffèrent entre elles d'un sous multiple de 360°, ce qui est souvent le cas. Les deux signaux représentatifs de l'amplitude A(n) et de la phase absolue $\psi(n)$ forment ensemble un signal qui caractérise complètement l'état d'amplitude et de phase de la porteuse à émettre aux instants nT. Ce signal est appliqué à un circuit d'émission 8 qui forme le signal analogique de porteuse modulée et qui comporte à son entrée un circuit 8-1 qui forme la composante réelle A(n)cos$\psi(n)$ et la composante imaginaire A(n)sin$\psi(n)$ du signal complexe de module A(n) et d'argument $\psi(n)$. Ensemble, ces deux composantes caractérisent également complètement l'état d'amplitude et de phase de la porteuse à émettre aux instants nT. Elles sont appliquées aux filtres passe-bande 8-2 dont les signaux de sortie sont additionnés en 8-3 pour former le signal analogique de porteuse modulée qui est dirigé vers l'accès d'émission de la jonction hybride 4.

La voie réception $\underline{2}$ du modem est connectée au récepteur 9 par l'intermédiaire d'un dispositif régénérateur composé d'un circuit d'échantillonnage et de maintien 10, actionné à la cadence $1/_T$, et d'un filtre passe-bas 11. Dans un mode de fonctionnement en duplex simultané des deux modems connectés aux deux extrémités de la ligne de transmission 3, le récepteur 9 ne devrait recevoir que des signaux émis par l'autre modem. Toutefois, par suite d'imperfections de l'équilibrage de la jonction hybride 4 et de réflexions dans la ligne de transmission 3, le récepteur 9 peut recevoir également un signal parasite $\epsilon(t)$ appelé signal d'écho et provenant du signal modulé fourni par le circuit d'émission 8.

Pour annuler ce signal d'écho, on utilise un annuleur d'écho comprenant un circuit de différence 12 qui reçoit d'une part le signal apparaissant sur l'extrémité réception de la jonction hybride 4 et d'autre part un signal d'écho synthétique $\hat{\epsilon}(t)$. Du point de vue du fonctionnement de l'annuleur d'écho, on peut supposer que seul le circuit d'émission 8 émet, de sorte que le signal provenant de la jonction hybride 4 et appliqué au circuit de différence 12 est le signal d'écho $\epsilon(t)$. Le signal de différence $e(t) = \epsilon(t) - \hat{\epsilon}(t)$, fourni par le circuit de différence 12 est alors le signal d'écho résiduel. C'est dans cette hypothèse qui permet de simplifier le raisonnement et les calculs que l'on se placera par la suite.

Le signal d'écho synthétique $\hat{\epsilon}(t)$ est disponible sous forme analogique à la sortie du convertisseur numérique-analogique 13. Il est engendré sous forme numérique par le générateur de signal d'écho synthétique 14 qui reçoit un signal D(n) caractérisant aux instants nT l'état de phase et d'amplitude de la porteuse à émettre. Il résulte des explications précédentes que ce signal D(n) peut être constitué comme l'indique la figure par l'ensemble des deux signaux représentatifs de l'amplitude A(n) et de la phase absolue $\psi(n)$ de la porteuse à émettre. Ce signal D(n) pourrait aussi être constitué par les deux composantes A(n) cos$\psi(n)$ et A(n) sin$\psi(n)$ qui sont formées à la sortie du circuit 8-1. On peut remarquer enfin que dans le cas où dans la voie d'émission $\underline{1}$ du modem ne se trouveraient pas disponibles des signaux caractérisant l'amplitude et la phase absolue de la porteuse à émettre, il serait toujours possible d'incorporer dans l'annuleur d'écho des circuits formant ces signaux, à partir des données brutes à transmettre.

Le générateur de signal d'écho synthétique 14 comporte un circuit de transcodage 17 qui fait correspondre à chaque échantillon du signal D(n) aux instants nT, p échantillons de signaux $D_1(n)$, $D_2(n)$, ... $D_p(n)$. Ces p signaux sont traités respectivement dans p filtres numériques adaptatifs 16-1, 16-2, ... 16-p. Les signaux de sortie de ces filtres sont additionnés au moyen du circuit additionneur 15 qui fournit sous forme numérique le signal d'écho synthétique.

Les filtres numériques adaptatifs 16-1 à 16-p comportent des circuits de réglage représentés par les zones hachurées, qui règlent les coefficients des filtres. Ces circuits de réglage sont commandés par le signal numérique fourni par le convertisseur analogique-numérique 19, dans lequel le signal d'écho résiduel e(t) fourni par le circuit de différence 12 est échantillonné et codé. Cet échantillonnage est effectué avec une fréquence $f_e$ fournie par le générateur d'horloge 7 et ayant une valeur multiple de $1/_T$, telle que le théorème de Shannon soit respecté, vis à vis du signal d'écho résiduel e(t). Les instants $t_e$ de cet échantillonnage sont liés aux instants d'échantillonnage nT du signal D(n) par la relation $t_e = nT + r\,^T/_M$, M étant un nombre entier fixe, égal par exemple à 6, r étant un nombre variant de 0 à M—1. Pour simplifier les explications et les calculs, on ne fait pas intervenir par la suite la variable r, et l'on suppose ainsi qu'on lui attribue une valeur fixe, mais il est entendu que les calculs indiqués doivent être effectués pour les M valeurs que peut prendre la variable r. Ainsi dans le signal d'écho résiduel numérique fourni par le convertisseur 19, on ne considère pour simplifier que les échantillons se produisant aux instants définis par la variable n, la variable r étant fixe et ce signal numérique est noté e(n). De même dans le signal d'écho synthétique numérique fourni par le générateur 14, on ne considère que les échantillons se produisant aux instants définis par la variable n et ce signal numérique est noté $\hat{e}$(n). Enfin, on sera amené à considérer les valeurs aux mêmes instants du signal d'écho $\epsilon$(t), ces valeurs étant notées $\epsilon$(n).

Les circuits de réglage inclus dans les filtres 16-1 à 16-p commandent les coefficients de ces filtres de façon itérative pour rendre minimale la valeur quadratique moyenne du signal d'écho résiduel e(n). Ce signal d'écho résiduel qui constitue le signal d'erreur de la boucle d'asservissement de l'annuleur d'écho, est souvent appelé par la suite signal d'erreur. Après un certain nombre d'itérations successives, on obtient pratiquement l'annulation du signal d'écho résiduel à la sortie du circuit de différence 12 et dans un fonctionnement en duplex simultané de deux modems connectés aux extrémités de la ligne de transmission 3, le récepteur 9 ne reçoit que des signaux provenant du modem distant.

Selon l'art antérieur précité (brevet n° 2 377 734 et certificat d'addition n° 2 394 938) le nombre p de filtres adaptatifs est généralement égal à la moitié des phases absolues possibles de la porteuse modulée, chaque filtre étant affecté à une paire de phases absolues possibles différant de 180°. Le circuit de transcodage 17 est équivalent à un circuit d'aiguillage qui, à chaque instant nT, dirige d'une part vers un filtre déterminé correspondant à la phase absolue $\psi$(n) un nombre représentatif de l'amplitude A(n) et d'autre part vers tous les autres filtres le nombre 0. Mais dans le cas d'une modulation avec plusieurs niveaux d'amplitude ayant entre eux des rapports «compliqués» tels que $1/3$ ou $\sqrt{2}$, les nombres non nuls appliqués aux filtres sont des nombres «compliqués» correspondant à ces rapports. Pour obtenir la précision requise dans l'annulation d'écho, on est amené à exprimer ces nombres «compliqués» avec au moins 8 bits et les coefficients des filtres avec au moins 12 bits de sorte que, dans les filtres, les multiplications des nombres d'entrée par les coefficients sont des opérations complexes et coûteuses. Dans la solution la meilleure décrite dans le certificat d'addition précité, on doit effectuer ces multiplications une fois par période d'échantillonnage T.

La présente invention fournit un annuleur d'écho dans lequel, au contraire, grâce à un circuit de transcodage 17 approprié, les signaux $D_1$(n) à $D_p$(n) appliqués aux filtres numériques adaptatifs ne comportent que les nombres $+1$, $-1$ ou 0, de sorte que ces filtres peuvent être réalisés très simplement et tous de façon identique. En outre, le même annuleur d'écho peut couvrir plusieurs types de modulation. Enfin, plusieurs types de transcodages sont possibles, pouvant conduire à plusieurs modes de réalisation en ce qui concerne le nombre de filtres numériques.

On va maintenant exposer dans le cas général les bases théoriques de l'invention. On va formuler d'abord les calculs à effectuer dans un générateur quelconque de signal d'écho synthétique 14, pour obtenir le signal d'écho synthétique $\hat{e}$(n), à partir du signal D(n). Le générateur de signal d'écho synthétique 14 a la fonction d'un filtre transversal qui, comme cela est connu, comporte des moyens pour stocker, à un instant nT caractérisé par le nombre entier n, N échantillons consécutifs d'entrée D(n), D(n−1) ... D(n−N + 1) et N coefficients $C_o$(n), $C_1$(n) ... $C_{N-1}$(n).

Pour simplifier l'écriture, on peut utiliser la notation vectorielle et considérer les N échantillons stockés dans le filtre transversal à un instant n comme les composantes d'un vecteur $\vec{D}$(n) tel que:

$$D(n) = \begin{bmatrix} D(n) \\ D(n-1) \\ . \\ . \\ . \\ D(n-N+1) \end{bmatrix}$$

De même, les N coefficients stockés dans le filtre à un instant n peuvent être considérés comme les composantes d'un vecteur $\vec{C}$(n) tel que:

$$C(n) = \begin{bmatrix} C_o(n) \\ C_1(n) \\ . \\ . \\ . \\ C_{N-1}(n) \end{bmatrix}$$

Le transposé $\underrightarrow{D}$(n) du vecteur $\vec{D}$(n) s'écrit:

$$\underrightarrow{D}(n) = [D(n) \quad D(n-1) \dots D(n-N+1)]$$

L'opération de convolution effectuée dans le générateur 14 à fonction de filtre transversal, pour fournir chaque échantillon du signal d'écho synthétique $\epsilon$(n) peut alors s'écrire:

$$\hat{e}(n) = \underrightarrow{D}(n).\vec{C}(n) \tag{1}$$

D'autre part, il est connu que, si on utilise l'algorithme du gradient pour rendre minimale la valeur quadratique moyenne du signal d'erreur e(t), on est conduit à régler par itérations successives les coefficients du filtre transversal constituant le générateur 14, en utilisant une formule de récurrence qui, en notation vectorielle, s'écrit:

$$\vec{C}(n+1) = \vec{C}(n) + \beta.E[e(n).\vec{D}(n)] \tag{2}$$

On peut consulter par exemple, à ce sujet, un article de Mueller paru dans IEEE Transactions, Vol. COM-24, n° 9, Sept. 1976, pages 956-962.

Dans la formule (2), le vecteur $\vec{C}$(n + 1) représente les coefficients du filtre à l'instant n + 1, $\beta$ est un coefficient constant inférieur à 1, E est un opérateur signifiant la valeur moyenne de la quantité entre crochets qui suit, cette valeur moyenne étant prise jusqu'à l'instant caractérisé par n.

Dans la pratique, la formule de récurrence (2) est remplacée par la formule de récurrence plus simple, évitant d'avoir à calculer une valeur moyenne:

$$\vec{C}(n+1) = \vec{C}(n) + \alpha.e(n).\vec{D}(n) \qquad (3)$$

$\alpha$ étant un coefficient très petit devant 1 et déterminant la grandeur de la modification des coefficients à chaque itération.

Enfin, si h(t) est la réponse impulsionnelle du trajet du signal d'écho $\epsilon$(t), trajet dans lequel est incorporé le circuit d'émission 8 avec ses filtres 8-2, on peut aussi définir un vecteur $\vec{h}(n)$ ayant comme composantes les valeurs de cette réponse impulsionnelle aux instants n, n−1, ... n−N+1. Le signal d'écho $\epsilon$(n) à l'instant n peut alors s'écrire de façon correspondante à la formule (1):

$$\epsilon(n) = \underset{\rightarrow}{D}(n).\vec{h}(n) \qquad (4)$$

La présente invention résulte de l'idée d'effectuer une décomposition du vecteur $\vec{D}(n)$ sur p vecteurs élémentaires $\vec{D}_1(n)$, $\vec{D}_2(n)$, ... $\vec{D}_p(n)$, en s'imposant deux conditions, à savoir que les composantes de ces vecteurs élémentaires ne prennent que les valeurs +1, −1 ou 0 et que ces vecteurs soient en moyenne indépendants entre eux.

Si l'on appelle $\vec{D}_i(n)$, $\vec{D}_{i'}(n)$ deux vecteurs élémentaires (i et i' entiers allant de 1 à p) et $D_i(n-q)$, $D_{i'}(n-q')$ les N composantes de ces vecteurs (q et q' entiers allant de 0 à N−1), la condition d'indépendance en moyenne entre les vecteurs élémentaires signifie que leurs composantes sont telles que:

$$\text{pour } i \neq i' \qquad E[D_i(n-q).D_{i'}(n-q')] = 0 \qquad (5)$$

L'indépendance entre les p vecteurs élémentaires peut s'exprimer plus simplement par la condition:

$$\text{pour } i \neq i' \qquad E[D_i(n).D_{i'}(n)] = 0 \qquad (5A)$$

Cette condition (5A) exprime l'indépendance en moyenne entre deux signaux élémentaires différents $D_i(n)$ et $D_{i'}(n)$.

La décomposition du vecteur $\vec{D}(n)$ sur p vecteurs élémentaires peut s'exprimer par la formule:

$$\vec{D}(n) = k_1\vec{D}_1(n) + k_2\vec{D}_2(n) + ... + k_p\vec{D}_p(n) \qquad (6)$$

Dans cette relation les facteurs $k_1$, $k_2$ ... $k_p$ sont complexes dans le cas général.

L'invention consiste à substituer au signal D(n), au moyen du circuit de transcodage 17, p signaux numériques élémentaires $D_1(n)$ à $D_p(n)$ ne prenant que les valeurs +1, −1 ou 0 et répondant à la condition d'indépendance exprimée par la formule (5A). Au lieu d'utiliser comme générateur de signal synthétique 14, un filtre numérique adaptatif fournissant le signal d'écho synthétique $\hat{\epsilon}$(n) en effectuant les calculs donnés par les expressions (1) et (2), on utilise suivant l'invention p filtres numériques adaptatifs 16-1 à 16-p traitant les signaux $D_1(n)$ à $D_p(n)$

fournis par le circuit de transcodage 17. Ces filtres utilisent les jeux de N coefficients que l'on peut représenter en notation vectorielle par les vecteurs $\vec{C}^1(n)$ à $\vec{C}^p(n)$. Il fournissent des signaux $\epsilon_1$(n) à $\epsilon_p$(n) qui sont calculés de façon analogue à l'expression (1):

$$\begin{cases} \hat{\epsilon}_1(n) = \underset{\rightarrow}{D_1}(n).\vec{C^1}(n) \\ \hat{\epsilon}_2(n) = \underset{\rightarrow}{D_2}(n).\vec{C^2}(n) \\ \quad \cdot \\ \quad \cdot \\ \quad \cdot \\ \hat{\epsilon}_p(n) = \underset{\rightarrow}{D_p}(n).\vec{C^p}(n) \end{cases} \qquad (7)$$

Les coefficients de ces filtres sont réglés en principe suivant les formules de récurrence correspondant à la formule (2):

$$\begin{cases} \vec{C^1}(n+1) = \vec{C^1}(n) + \beta \, E[e(n).\vec{D}_1(n)] \\ \vec{C^2}(n+1) = \vec{C^2}(n) + \beta \, E[e(n).\vec{D}_2(n)] \\ \quad \cdot \\ \quad \cdot \\ \quad \cdot \\ \vec{C^p}(n+1) = \vec{C^p}(n) + \beta \, E[e(n).\vec{D}_p(n)] \end{cases} \qquad (8)$$

Dans la pratique les coefficients sont réglés suivant les formules de récurrence plus simples, analogues à la formule (3):

$$\begin{cases} \vec{C^1}(n+1) = \vec{C^1}(n) + \alpha.e(n).\vec{D}_1(n) \\ \vec{C^2}(n+1) = \vec{C^2}(n) + \alpha.e(n).\vec{D}_2(n) \\ \quad \cdot \\ \quad \cdot \\ \quad \cdot \\ \vec{C^p}(n+1) = \vec{C^p}(n) + \alpha.e(n).\vec{D}_p(n) \end{cases} \qquad (9)$$

Le signal d'écho synthétique numérique $\hat{\epsilon}$(n) est la somme des signaux de sortie des filtres:

$$\hat{\epsilon}(n) = \hat{\epsilon}_1(n) + \hat{\epsilon}_2(n) + ... + \hat{\epsilon}_p(n) \qquad (10)$$

On va maintenant montrer qu'en opérant de cette manière, le signal d'erreur e(n) = $\epsilon$(n) − $\hat{\epsilon}$(n) tend vers zéro, ce qui correspond pratiquement à l'annulation du signal d'écho résiduel e(t) à la sortie du circuit de différence 12.

En tenant compte des formules (7) le signal d'écho synthétique donné par la formule (10) peut s'écrire:

$$\hat{\epsilon}(n) = \underset{\rightarrow}{D_1}(n) \, \vec{C^1}(n) + \underset{\rightarrow}{D_2}(n) \, \vec{C^2}(n) + ... + \underset{\rightarrow}{D_p}(n) \, \vec{C^p}(n)$$

D'autre part en tenant compte de la formule (6) de décomposition du vecteur $\vec{D}(n)$, le signal d'écho $\epsilon$(n) donné par la formule (4) peut s'écrire:

$$\epsilon(n) = \underset{\rightarrow}{D_1}(n).k_1.\vec{h}(n) + \underset{\rightarrow}{D_2}(n).k_2.\vec{h}(n) + ... + \underset{\rightarrow}{D_p}(n).k_p.\vec{h}(n)$$

On en déduit que le signal d'erreur e(n) s'écrit, avec la conception de l'annuleur d'écho de l'invention:

$$e(n) = \underset{\rightarrow}{D_1}(n) \, [k_1.\vec{h}(n) - \vec{C^1}(n)] + \underset{\rightarrow}{D_2}(n) [k_2.\vec{h}(n) - \vec{C^2}(n)] + ... + \underset{\rightarrow}{D_p}(n) \, [k_p.\vec{h}(n) - \vec{C^p}(n)] \qquad (11)$$

D'après les formules (8), les termes de modification des coefficients à chaque itération, sont respectivement pour les filtres 16-1 à 16-p:

$$\begin{cases}\Delta_1 = \beta.E\,[e(n)\,\vec{D_1}(n)]\\[2pt] \Delta_2 = \beta.E\,[e(n)\,\vec{D_2}(n)]\\[2pt] \ \vdots\\[2pt] \Delta_p = \beta.E\,[e(n)\,\vec{D_p}(n)]\end{cases}\qquad(12)$$

En remplaçant e(n) par son développement donné par la formule (11), le terme $\Delta_1$ par exemple, peut s'écrire:

$$E\begin{bmatrix} D_1(n).D_1(n) & D_1(n).D_1(n-1) & \cdots & D_1(n).D_1(n-N+1)\\ D_1(n-1).D_1(n) & D_1(n-1).D_1(n-1) & \cdots & D_1(n-1).D_1(n-N+1)\\ \vdots & & & \\ D_1(n-N+1).D_1(n) & D_1(n-N+1).D_1(n-1) & \cdots & D_1(n-N+1).D_1(n-N+1)\end{bmatrix}\qquad(14)$$

En appliquant l'opérateur E, à tous les termes de la matrice de l'expression (14) on obtient une matrice dont tous les termes sont nuls, sauf ceux de la diagonale. En effet tous les termes autres que ceux de la diagonale sont des produits de deux nombres qui sont forcément aléatoires comme les données à transmettre et dont les valeurs possibles +1, −1 et 0 sont équiprobables.

Finalement l'expression (14) est une matrice diagonale dont les termes sont respectivement:

$E[(D_1(n))^2], E[(D_1(n-1))^2], \dots E[(D_1(n-N+1))^2]$

Ces termes sont égaux à une même constante σ qui représente une puissance de signal. Ainsi l'expression (14) est le produit d'une constante σ et de la matrice identité, et est donc égale à la constante σ.

Pour former le deuxième terme de la formule (13) donnant $\Delta_1$, on est conduit à calculer l'expression $E[\vec{D_1}(n).D_2(n)]$. Or cette expression est une matrice dont les termes peuvent s'exprimer par la formule $E[D_1(n-q).D_2(n-q')]$, q et q' prenant toutes les valeurs entières de 0 à N−1. D'après la formule (5) qui exprime l'indépendance des vecteurs élémentaires de décomposition du vecteur D(n), tous les termes de cette matrice sont nuls et l'on en déduit que le deuxième terme de la formule (13) est nul. On peut montrer de la même manière que tous les termes suivants de la formule (13) sont également nuls.

On en déduit finalement que le terme de modification $\Delta_1$ des coefficients $\vec{C^1}(n)$ s'écrit:

$$\Delta_1 = \beta[k_1\vec{h}(n) - \vec{C^1}(n)].\sigma$$

La première des formules de récurrence (8) peut alors s'écrire:

$$\vec{C^1}(n+1) = \vec{C^1}(n)[1-\beta\sigma] + \beta\sigma k_1\vec{h}(n)\qquad(15)$$

Cette formule de récurrence revêt une forme classique du type $\vec{C}(n+1) = \vec{C}(n).\lambda + \mu$ et l'on sait que

$$\begin{aligned}\Delta_1 &= \beta.[k_1\vec{h}(n) - \vec{C^1}(n)].E[\vec{D_1}(n).D_1(n)]\\ &+ \beta.[k_2\vec{h}(n) - \vec{C^2}(n)].E[\vec{D_1}(n).D_2(n)]\\ & \qquad\qquad\qquad\vdots\\ &+ \beta.[k_p\vec{h}(n) - \vec{C^p}(n)].E[\vec{D_1}(n).D_p(n)]\end{aligned}\qquad(13)$$

On remarquera que pour établir cette expression de $\Delta_1$, on a tenu compte du fait que les termes des facteurs $[k_1\vec{h}(n) - \vec{C^1}(n)]$ à $[k_p\vec{h}(n) - \vec{C^p}(n)]$ ne sont pas aléatoires, ce qui a permis de ne pas appliquer l'opérateur E à ces facteurs.

Pour former le premier terme de la formule (13) donnant $\Delta_1$, on est conduit à calculer l'expression $E[\vec{D_1}(n)\,D_1(n)]$ qui, sous forme matricielle, s'écrit:

lorsque n tend vers l'infini C(n) peut mettre sous la forme $\lambda^n + {}^\mu/_{1-\lambda}$. En appliquant ce résultat à la formule (15), on peut écrire pour n tendant vers l'infini:

$$\vec{C_1}(n) = [1-\beta\sigma]^n + \frac{\beta\sigma}{1-[1-\beta\sigma]}.k_1\vec{h}(n)$$

Puisque $\beta < 1$, on a $1 - \beta\sigma < 1$ et la limite de $C_1(n)$ pour n tendant vers l'infini est $k_1h(n)$.

On peut effectuer des calculs analogues pour les autres formules de récurrence (8) et montrer finalement que dans l'annuleur d'écho de l'invention les coefficients des filtres 16-1 à 16-p s'ajustent pratiquement pour un nombre d'itération suffisamment grand, de telle sorte que:

$$\begin{cases}\vec{C^1}(n) = k_1\vec{h}(n)\\[2pt] \vec{C^2}(n) = k_2\vec{h}(n)\\[2pt] \ \vdots\\[2pt] \vec{C^p}(n) = k_p\vec{h}(n)\end{cases}\qquad(16)$$

Lorsque les coefficients $\vec{C^1}(n)$ à $\vec{C^p}(n)$ atteignent les valeurs données par les formules (16), et correspondant à la convergence de l'annuleur d'écho, le signal d'erreur e(n) est nul, comme on peut le vérifier sur la formule (11) et le signal d'écho résiduel e(t) est nul.

On peut encore interpréter comme suit le fonctionnement de l'annuleur d'écho de l'invention. Dans cet annuleur d'écho comportant autant de filtres 16-1 à 16-p qu'il est nécessaire pour que ces filtres traitent des signaux $D_1(n)$ à $D_p(n)$ à valeurs +1, −1 ou 0 et indépendants en moyenne, on obtient automatiquement, grâce à l'algorithme de modification des coefficients de ces filtres, une multiplication (ou modulation) de ces signaux $D_1(n)$ à $D_p(n)$ par les facteurs respectifs $k_1$ à $k_p$, de façon que la somme de ces signaux ainsi multipliés (ou modulés) soit égale au signal d'origine D(n).

On peut remarquer ici que la condition d'indépendance en moyenne entre les signaux élémentaires $D_1(n)$ à $D_p(n)$, telle qu'elle est exprimée par la formule (5A) est forcément respectée si, à chaque instant n, on a:

$$\text{pour } i \neq i' \qquad D_i(n)\, D_{i'}(n) = 0 \qquad (17)$$

Le respect de cette condition qui indique une indépendance instantanée entre les signaux élémentaires $D_1(n)$ à $D_p(n)$, est obtenu avec un circuit de transcodage 17, fournissant à chaque instant n, pour n'importe lequel des états de modulation de la porteuse, un seul signal élémentaire non nul et égal à $+1$ ou $-1$.

L'indépendance entre les signaux élémentaires $D_1(n)$ à $D_p(n)$ sera respectée seulement en moyenne, si le circuit de transcodage 17 est agencé pour faire correspondre aux états distincts de modulation de la porteuse des configurations distinctes de valeurs $+1,\ -1$ ou 0 des signaux élémentaires, de sorte qu'en formant tous les produits possibles de deux de ces valeurs dans chaque configuration, la somme de tous les produits possibles pour toutes les configurations soit nulle. Comme les états de modulation de la porteuse sont équiprobables, la condition (5A) qui exprime l'indépendance en moyenne entre les signaux élémentaires est alors bien respectée.

Comme on le verra par la suite sur des exemples se rapportant à diverses modulations de la porteuse, un premier genre de modes de réalisation de l'annuleur d'écho de l'invention correspond à une indépendance instantanée entre les signaux élémentaires. Dans ces modes de réalisation, on obtient une convergence rapide de l'annuleur d'écho, souvent au prix d'un nombre plus important de filtres. Dans un deuxième genre de modes de réalisation, l'indépendance entre les signaux élémentaires n'est obtenue qu'en moyenne et par conséquent la convergence de l'annuleur d'écho est plus lente; mais le nombre de filtres nécessaires est souvent plus faible.

Comme on l'a indiqué ci-dessus, les facteurs $k_1$ à $k_p$ intervenant dans la décomposition du signal D(n), sont d'une manière générale des nombres complexes et on en déduit d'après les formules (16) que les coefficients $\overrightarrow{C^1}(n)$ à $\overrightarrow{C^p}(n)$ sont forcément des nombres complexes. Cela veut dire qu'en dehors des signaux $D_1(n)$ à $D_p(n)$ qui ont des valeurs réelles $+1$, $-1$ ou 0, tous les signaux utilisés dans la démonstration précédente sont formés de nombres complexes. Donc dans l'annuleur d'écho, chaque filtre 16-1 à 16-p doit comporter en principe deux filtres, l'un travaillant avec la partie réelle $\overrightarrow{C^1_R}(n)$ à $\overrightarrow{C^p_R}(n)$ des coefficients et l'autre avec leur partie imaginaire $\overrightarrow{C^1_I}(n)$ à $\overrightarrow{C^p_I}(n)$. On obtient alors un signal d'écho synthétique $\hat{\epsilon}(n)$ comportant une partie réelle $\hat{\epsilon}_R(n)$ et une partie imaginaire $\hat{\epsilon}_I(n)$. Pour obtenir un signal d'écho complexe $\epsilon(n)$ à partir du signal provenant de la jonction hybride 4 et qui est la partie réelle $\epsilon^R(n)$ de ce signal complexe, on peut utiliser, de façon connue, un circuit déphaseur de 90° (non représenté) fournissant la partie imaginaire $\epsilon_I(n)$. A partir du signal d'erreur complexe e(n) fourni par le circuit de différence 12, on peut alors commander séparément les coefficients de chacun des deux filtres composant les filtres 16-1 à 16-p.

En fait, pour annuler le signal d'écho réel $\epsilon^R(n)$ provenant de la jonction hybride 4, il n'est pas utile de faire travailler l'annuleur d'écho sur des signaux complexes, ce qui conduirait comme on vient de le voir, à utiliser des paires de filtres dans les filtres 16-1 à 16-p.

Supposons en effet que ces filtres 16-1 à 16-p soient formés chacun par un seul filtre et aient des coefficients qui sont respectivement les parties réelles $\overrightarrow{C^1_R}(n)$ à $\overrightarrow{C^p_R}(n)$ des coefficients complexes. Le signal d'écho synthétique est alors un signal réel $\hat{\epsilon}_R(n)$ et l'on peut montrer aisément que le signal d'erreur réel $e_R(n) = \hat{\epsilon}_R(n) - \epsilon_R(n)$ peut s'écrire de façon correspondante à la formule (11):

$$e_R(n) = \underrightarrow{D_1}(n)\left\{\mathcal{R}e[k_1.\overrightarrow{h}(n)] - \overrightarrow{C^1_R}(n)\right\} +$$

$$+ \ldots + \underrightarrow{D_p}(n)\left\{\mathcal{R}e[k_p.\overrightarrow{h}(n)] - \overrightarrow{C^p_R}(n)\right\} \qquad (18)$$

On doit noter que, dans cette formule (18), $k_1$ à $k_p$ et $\overrightarrow{h}(n)$ peuvent être des nombres complexes.

D'autre part, on peut montrer, de la même manière que ci-dessus, qu'en commandant les coefficients $\overrightarrow{C^1_R}(n)$ à $\overrightarrow{C^p_R}(n)$, suivant des formules de récurrence analogues à (8) et utilisant le signal d'erreur $e_R(n)$, ces coefficients s'ajustent pratiquement, pour un nombre d'itérations suffisamment grand de telle sorte que:

$$\begin{cases} \overrightarrow{C^1_R}(n) = \mathcal{R}\, e[k_1.\overrightarrow{h}(n)] \\ \overrightarrow{C^2_R}(n) = \mathcal{R}\, e[k_2.\overrightarrow{h}(n)] \\ \quad . \\ \quad . \\ \overrightarrow{C^p_R}(n) = \mathcal{R}\, [k_p.\overrightarrow{h}(n)] \end{cases} \qquad (19)$$

Il en résulte alors, d'après la formule (18) que le signal d'erreur réel $e_R(n)$ est annulé. Dans la pratique ce résultat est obtenu en utilisant des formules de récurrence plus simples à mettre en oeuvre et analogues aux formules (9), dans lesquelles les coefficients de filtres sont des nombres réels et le signal d'erreur est réel.

L'annuleur d'écho de l'invention est donc composé de filtres numériques adaptatifs 16-1 à 16-p identiques, munis de coefficients réels ajustés à partir d'un signal d'erreur réel. Il n'est donc pas nécessaire d'utiliser par la suite l'indice R pour indiquer que les signaux et les coefficients de filtres sont réels.

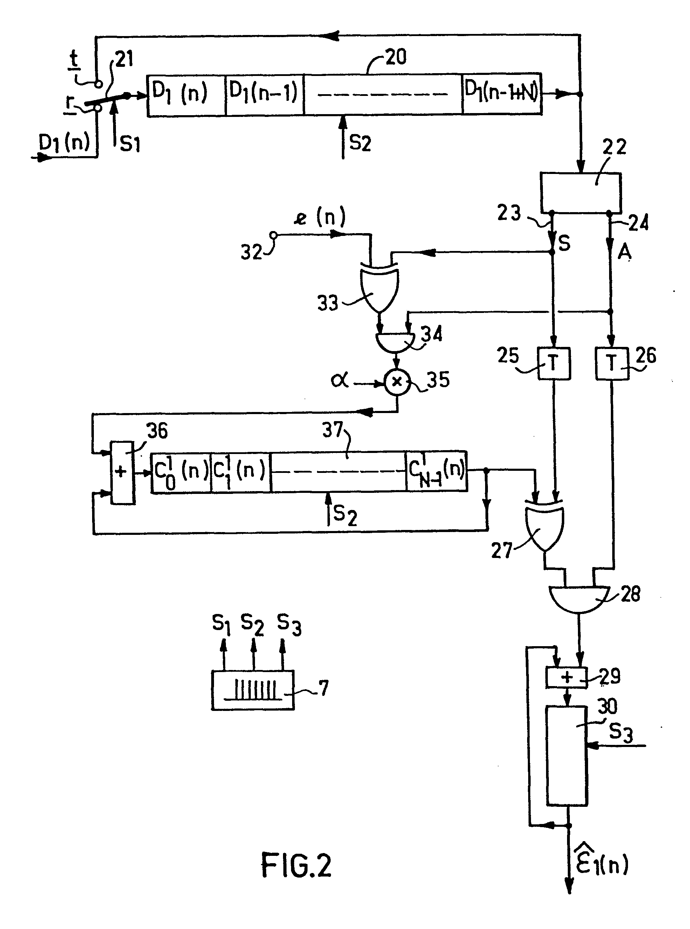

Un mode de réalisation d'un de ces filtres, le filtre 16-1 par exemple, est représenté à la figure 2.

Si l'on appelle $D_1(n-q)$ les nombres d'entrée stockés dans ce filtre et $C^1_q(n)$ les coefficients de ce filtre (q entier allant de 0 à $N-1$), chaque nombre de sortie $\hat{\epsilon}_1(n)$ doit être calculé suivant l'expression suivante, équivalente à la première des formules (7):

$$\hat{\epsilon}_1(n) = \sum_{q=0}^{N-1} D_1(n-q).C^1_q(n) \qquad (20)$$

On déduit d'autre part de la première des formules (9) que les N coefficients de ce filtre doivent être modifiés suivant la formule de récurrence:

$$C^1_q(n+1) = C^1_q(n) + \alpha\, e(n)\, D_1(n-q) \qquad (21)$$

On voit sur la figure 2 que les nombres + 1, — 1 ou 0 du signal $D_1(n)$ à traiter par le filtre sont appliqués au registre à décalage 20 par l'intermédiaire du contact $\underline{r}$ du circuit commutateur à deux positions 21. Ce commutateur 21 est commandé par les impulsions à la fréquence $^1/_T$ du signal de commande $S_1$ fourni par le générateur d'horloge 7. Le contact $\underline{r}$ est établi pendant un court instant au début de chaque période T pour faire entrer dans le registre 20 un nombre du signal $D_1(n)$. Le registre 20 comporte N éléments et, au début d'une période T correspondant à un instant n, il contient N nombres $D_1(n-q)$ du signal $D_1(n)$. Pendant le reste du temps de chaque période T, le circuit commutateur 21 est commandé pour établir son contact $\underline{t}$ qui connecte la sortie et l'entrée du registre à décalage 20. Les impulsions de décalage de ce registre constituent le signal référence $S_2$. La fréquence de ces impulsions est telle que lorsque l'entrée et la sortie du registre sont connectées, l'ensemble de N nombres $D(n-q)$ y circule autant de fois qu'il se produit d'échantillons du signal d'erreur e(n) au cours de chaque période T. Dans ce qui suit, pour simplifier les explications on suppose d'abord qu'un seul échantillon e(n) du signal d'erreur se produit pendant une période T de sorte que, pendant cette période, les N nombres $D_1(n-q)$ n'apparaissent qu'une fois à la sortie du registre 20.

Ces nombres sont appliqués au circuit série-parallèle 22 à deux sorties 23 et 24. Sur la sortie 23 apparaît le bit S caractérisant le signe des nombres $D_1(n-q)$ et sur la sortie 24 le bit A caractérisant leur amplitude qui ne prend que la valeur 1 ou 0. Les circuits de retard 25 et 26 connectés aux sorties 23 et 24 du circuit 22 font apparaître avec un retard T les nombres $D_1(n-q)$ caractérisés par leur bit de signe S et leur bit d'amplitude A. Le bit de signe S est appliqué à une entrée du circuit OU exclusif 27. Sur l'autre entrée de ce circuit 27 apparaissent, en synchronisme avec les nombres $D_1(n-q)$, les coefficients $C^1_q(n)$ élaborés comme on l'expliquera par la suite. Le circuit OU exclusif effectue ainsi la multiplication des coefficients $C^1_q(n)$ par + 1 ou — 1 selon le signe des nombres $D_1(n-q)$. La sortie du circuit OU exclusif 27 est connectée à une entrée de la porte ET 28 dont l'autre entrée reçoit le bit d'amplitude A des nombres $D_1(n-q)$.

Finalement à la sortie de la porte ET 28 on obtient, successivement au cours d'une période T, les N produits $D_1(n-q).C^1_q(n)$ apparaissant dans la formule (20). La somme de ces produits permettant d'obtenir le signal de sortie du filtre $\hat{e}_1(n)$ est obtenue en connectant la sortie de la porte ET 28 à un circuit additionneur 29 connecté à un registre mémoire 30 de façon à former un accumulateur. Ce registre remis à zéro à un instant convenable de chaque période T par le signal $S_3$, fournit le signal $\hat{e}_1(n)$ conformément à la formule (20).

Les N coefficients $C^1_q(n)$ utilisés à chaque période T doivent être élaborés suivant la formule de récurrence (21) qui est mise en oeuvre comme suit. Pendant la durée T du retard produit par les circuits de retard 25 et 26, l'échantillon e(n) du signal d'erreur qui apparaît sur la borne 32 multiplié successivement par les N nombres $D_1(n-q)$ à valeurs + 1, — 1 ou 0, qui apparaissent chacun à la sortie du circuit 22 sous la forme d'un bit de signe S et d'un bit d'amplitude A. Ces multiplications sont effectuées au moyen du circuit OU exclusif 33 et du circuit ET 34 montés de façon analogue aux circuits 27 et 28. Les N produits $e(n).D_1(n-q)$ ainsi obtenus au cours d'une période T sont multipliés dans le circuit 35 par le coefficient $\alpha$ dont la valeur est très faible par rapport à 1. En choisissant comme coefficient $\alpha$ une puissance de deux, cette multiplication consiste simplement en un décalage constant des bits du nombre à multiplier. On obtient ainsi les N termes de modification $\alpha.e(n).D_1(n-q)$ qui sont à ajouter respectivement aux N coefficients $C^1_q(n)$ pour obtenir les N coefficients $C^1_q(n+1)$.

Cette addition est effectuée au moyen du circuit additionneur 36 dont une entrée est connectée à la sortie du circuit 35, dont la sortie est connectée à l'entrée du registre à décalage 37, la sortie de ce dernier étant connectée à l'autre entrée du circuit additionneur 36. Le registre à décalage 37 comporte N éléments pour stocker les N coefficients $C^1_q(n)$. Ce registre est décalé par les mêmes impulsions de décalage formant le signal $S_2$ que celles qui décalent le registre 20. De cette manière, les N coefficients $C^1_q(n)$ qui apparaissent à la sortie du registre à décalage 37 sont dirigés en même temps vers l'entrée du circuit OU exclusif 27 et vers le circuit additionneur 36 qui forme à sa sortie les N coefficients correspondants à utiliser à la période T suivante.

Comme on l'a déjà indiqué, pour respecter le théorème de Shannon le signal d'erreur doit être généralement échantillonné plusieurs fois au cours de chaque période T. S'il se produit M échantillons du signal d'erreur au cours d'une période T, les nombres $D_1(n-q)$ devront circuler M fois dans le registre à décalage 20 au cours d'une période T et le registre 37 devra comporter M.N éléments pour pouvoir stocker M.N coefficients. Au cours d'une période T, on obtient à la sortie du registre 30 M échantillons du signal $\hat{e}_1(n)$.

L'homme de l'art comprendra aisément que l'accumulateur de sortie du filtre, formé par le circuit additionneur 29 et le registre mémoire 30 peut être commun aux p filtres 16-1 à 16-p de l'annuleur d'écho, le circuit additionneur 29 jouant alors le rôle du circuit additionneur 15 de la figure 1.

On va maintenant décrire différents modes de réalisation de l'invention dans des cas pratiques de modulation. Outre les avantages de simplicité et de modularité qui ressortent clairement de la description générale faite jusqu'à présent, d'autres avantages apparaîtront, notamment l'adaptation automatique de l'annuleur d'écho à divers types de modulation pour lesquels la porteuse émise présente le même nombre d'états de modulation, et aussi l'adaptation aisée de l'annuleur d'écho pour un fonctionnement du modem en vitesse de repli.

On examine d'abord le cas de la modulation à 8 états de la porteuse émise qui est utilisée dans les modems transmettant 4800 bits/S, avec une rapidité de modulation de 1600 bauds. Dans ce cas, le signal D(n) représentatif de l'amplitude et de la phase absolue de la porteuse aux instants nT ($^1/_T = 1600$ Hz) a 8 valeurs possibles.

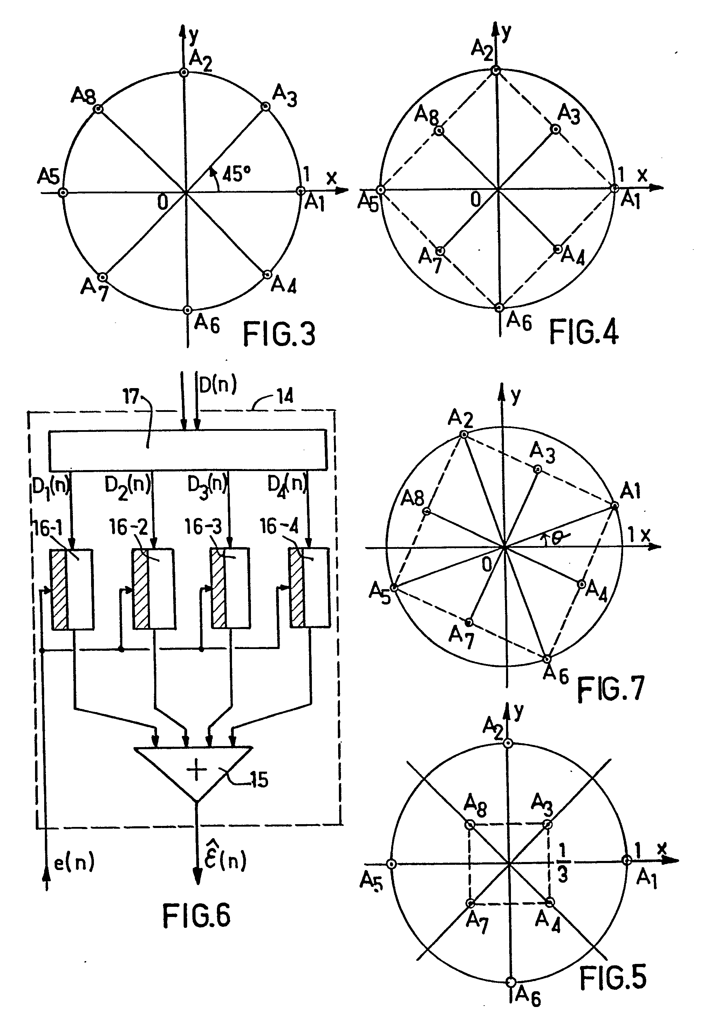

Dans un type de modulation à 8 états, la porteuse émise a une seule amplitude et peut prendre 8 phases distinctes par rapport à une phase de référence, l'une de ces phases étant nulle et les autres étant des multiples de 45°. Les 8 états possibles de la porteuse émise sont représentés de façon usuelle sur le diagramme de la figure 3, par 8 points $A_1$ à $A_8$ correspondant à l'amplitude 1 et aux phases précitées référencées par rapport à l'axe Ox.

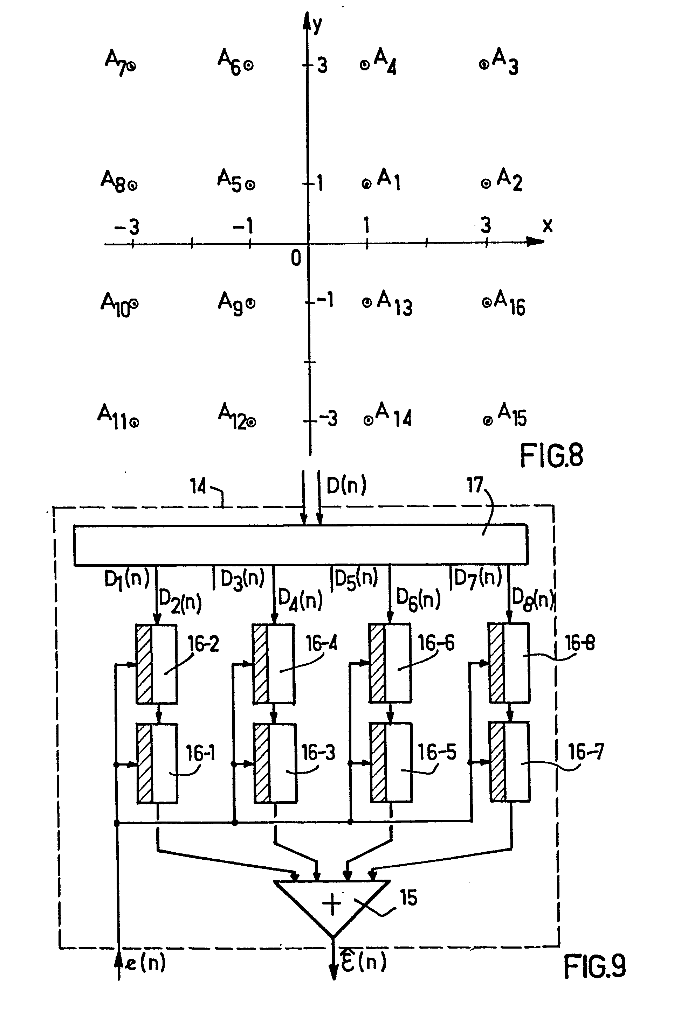

Dans un autre type de modulation à 8 états représentés par les points $A_1$ à $A_8$ sur le diagramme de la figure 4, la porteuse émise peut prendre deux amplitudes et 8 phases. Les points $A_1$ à $A_8$ correspondent aux mêmes phases de la porteuse que sur le diagramme de la figure 3. Les points $A_1$, $A_2$, $A_5$, $A_6$ correspondent à l'amplitude 1 et les points $A_3$, $A_4$, $A_7$, $A_8$ correspondent à l'amplitude $\sqrt{2}/2$.

Enfin le type de modulation à 8 états représenté sur le diagramme de la figure 5 diffère de celui représenté sur le diagramme de la figure 4 par le fait que les points $A_3$, $A_4$, $A_7$, $A_8$ correspondent à l'amplitude $\sqrt{2}/3$.

Avec la conception de l'annuleur d'écho de l'invention, le même annuleur d'écho peut convenir pour ces trois types de modulation à 8 états et généralement pour d'autres types de modulation à 8 états.

Suivant un mode de réalisation de l'invention, on utilise dans l'annuleur d'écho un circuit de transcodage 17 faisant correspondre aux 8 valeurs possibles du signal D(n), c'est-à-dire aux 8 états de la porteuse représentés par les points $A_1$ à $A_8$, des valeurs de 4 signaux $D_1(n)$, $D_2(n)$, $D_3(n)$, $D_4(n)$, conformément au tableau I ci-dessous.

Tableau I

| D(n) | $A_1$ | $A_2$ | $A_3$ | $A_4$ | $A_5$ | $A_6$ | $A_7$ | $A_8$ |
|------|-------|-------|-------|-------|-------|-------|-------|-------|
| $D_1(n)$ | +1 | O | O | O | −1 | O | O | O |
| $D_2(n)$ | O | +1 | O | O | O | −1 | O | O |
| $D_3(n)$ | O | O | +1 | O | O | O | −1 | O |
| $D_4(n)$ | O | O | O | +1 | O | O | O | −1 |

Conformément à la conception expliquée plus haut sous forme générale, le transcodage conforme au tableau I fait correspondre au signal D(n), quatre signaux élémentaires $D_1(n)$ à $D_4(n)$ prenant les valeurs +1, −1 ou 0. Ces quatre signaux répondent à la condition d'indépendance instantanée exprimée par la formule (17), puisque pour n'importe quel état de la porteuse à un instant n, les produits de deux des signaux $D_1(n)$ à $D_4(n)$ sont nuls.

Dans le cas de la modulation à 8 états représentée par le diagramme de la figure 3, le transcodage suivant le tableau I peut s'exprimer par la formule de décomposition suivante du signal D(n):

$$D(n) = D_1(n) + j\, D_2(n) + \frac{1+j}{\sqrt{2}} D_3(n) + \frac{1-j}{\sqrt{2}} D_4(n)$$

On peut vérifier aisément cette formule sur le diagramme de la figure 3, dont les axes Ox et Oy permettent de représenter les parties réelle et imaginaire de nombres complexes.

Cette formule correspond à la formule générale de décomposition (6), limitée à quatre termes, avec les facteurs:

$$k_1 = 1 \qquad K_2 = j \qquad k_3 = \frac{1+j}{\sqrt{2}} \qquad k_4 = \frac{1-j}{\sqrt{2}}$$

Dans le cas de la modulation à 8 états représentée par le diagramme de la figure 4, le transcodage suivant le tableau I peut s'exprimer par la formule de décomposition:

$$D(n) = D_1(n) + j\, D_2(n) + \frac{1+j}{2} D_3(n) + \frac{1-j}{2} D_4(n)$$

Enfin, dans le cas de la modulation à 8 états représentée par le diagramme de la figure 5, le transcodage suivant le tableau I peut s'exprimer par la formule:

$$D(n) = D_1(n) + j\, D_2(n) + \frac{1+j}{3} D_3(n) + \frac{1-j}{3} D_4(n)$$

On déduit aisément de ces deux dernières formules, les quatre facteurs $k_1$, $k_2$, $k_3$, $k_4$, qui leur correspondent.

Un annuleur d'écho convenant pour une modulation à 8 états et basé sur le transcodage du tableau I, comporte alors, comme le montre la figure 6, un générateur de signal d'écho synthétique 14 muni d'un circuit de transcodage 17, formant, conformément au tableau I, à partir du signal D(n), 4 signaux $D_1(n)$ à $D_4(n)$. Ces signaux sont traités, comme on l'a déjà expliqué, dans quatre filtres adaptatifs 16-1 à 16-4 recevant le même signal d'erreur e(n). Le signal d'écho synthétique $\hat{e}(n)$ est obtenu en formant, à l'aide du circuit additionneur 15, la somme des signaux de sortie des 4 filtres. Le circuit de transcodage 17 peut être réalisé par exemple au moyen d'une mémoire contenant les 8 configurations possibles de l'ensemble des 4 signaux $D_1(n)$ à $D_4(n)$ et lue par le signal D(n), de façon à faire apparaître séparément les 4 signaux $D_1(n)$ à $D_4(n)$.

Pour les trois types de modulation représentés par les diagrammes des figures 3, 4 et 5, on obtient pratiquement après un certain nombre de récurrences pour modifier les coefficients des filtres, l'annulation du signal d'erreur e(n), c'est-à-dire de l'écho. Suivant une interprétation déjà donnée, on peut dire que, lorsque l'annulation de l'écho est réalisée, il s'est réalisé automatiquement dans les filtres 16-1 à 16-4 une multiplication des signaux $D_1(n)$ à $D_4(n)$ à valeurs $+1$, $-1$ ou 0 par les facteurs réels ou complexes $k_1$ à $k_4$, ces facteurs étant différents pour les trois types de modulation et ayant les valeurs indiquées ci-dessus.

Le même annuleur d'écho convient également, sans aucune modification, pour d'autres types de modulation à 8 états, par exemple un type de modulation représenté sur le diagramme de la figure 7 qui est obtenu en faisant tourner le diagramme de la figure 4, d'un angle Θ qui peut être égal à 22°5. Avec l'annuleur d'écho basé sur le transcodage du tableau I, on obtient ici encore l'annulation de l'écho, la multiplication des signaux $D_1(n)$ à $D_4(n)$ par les facteurs $k_1$ à $k_4$ dépendant notamment de l'angle Θ, étant effectuée automatiquement dans les filtres 16-1 à 16-4.

On va maintenant décrire un autre mode de réalisation de l'annuleur d'écho de l'invention, convenant également pour la modulation à 8 états de la porteuse émise, mais dans lequel l'indépendance entre les signaux élémentaires de décomposition du signal $D(n)$ n'est réalisée qu'en moyenne. Pour ce mode de réalisation on peut par exemple utiliser un circuit 17 effectuant un transcodage conforme au tableau II ci-dessous:

Tableau II

| $D(n)$ | $A_1$ | $A_2$ | $A_3$ | $A_4$ | $A_5$ | $A_6$ | $A_7$ | $A_8$ |
|---|---|---|---|---|---|---|---|---|
| $D_1(n)$ | $+1$ | 0 | 0 | 0 | $-1$ | 0 | 0 | 0 |
| $D_2(n)$ | 0 | $+1$ | 0 | 0 | 0 | $+1$ | 0 | 0 |
| $D_3(n)$ | 0 | 0 | $+1$ | $+1$ | 0 | 0 | $-1$ | $-1$ |
| $D_4(n)$ | 0 | 0 | $+1$ | $-1$ | 0 | 0 | $-1$ | $+1$ |

Avec ce transcodage on voit que généralement les produits de deux des signaux $D_1(n)$ à $D_4(n)$ sont nuls sauf le produit $D_3(n).D_4(n)$ qui n'est pas nul pour les états $A_3$, $A_4$, $A_7$ et $A_8$. Mais étant donné d'une part que ces états sont équiprobables et d'autre part que le produit $D_3(n).D_4(n)$ vaut $+1$ pour deux de ces états ($A_3$ et $A_7$) et $-1$ pour les deux autres états ($A_4$ et $A_8$), il est certain que ce produit $D_3(n).D_4(n)$ est nul en moyenne de sorte que la condition d'indépendance en moyenne exprimée par la formule (5A) est respectée.

Un annuleur d'écho conforme à l'invention, convenant pour la modulation à 8 états et utilisant un transcodage conforme au tableau II, est, en dehors du circuit de transcodage 17, exactement semblable à l'annuleur d'écho utilisant le transcodage conforme au tableau I. En particulier le schéma du générateur 14 de signal d'écho synthétique est celui de la figure 6. Le même annuleur d'écho convient sans aucune modification pour les 4 types de modulation représentés aux figures 3, 4, 5 et 7. Par rapport à un annuleur d'écho utilisant le transcodage suivant le tableau I, celui utilisant le transcodage suivant le tableau II présente l'inconvénient de requérir plus de temps pour obtenir pratiquement l'annulation du signal d'écho.

Dans le cas de la modulation représentée par le diagramme de la figure 3, le transcodage suivant le tableau II, peut s'exprimer par la relation de décomposition suivante du signal $D(n)$:

$$D(n) = D_1(n) + j\,D_2(n) + \frac{1}{\sqrt{2}}D_3(n) + \frac{j}{\sqrt{2}}D_4(n)$$

Dans le cas de la modulation représentée par le diagramme de la figure 4, la relation de décomposition du signal $D(n)$ est:

$$D(n) = D_1(n) + j\,D_2(n) + \frac{1}{2}D_3(n) + \frac{j}{2}D_4(n)$$

Dans le cas de la modulation représentée par le diagramme de la figure 5, la relation de décomposition du signal $D(n)$ est:

$$D(n) = D_1(n) + j\,D_2(n) + \frac{1}{3}D_3(n) + \frac{j}{3}D_4(n)$$

Dans le cas de la modulation représentée par le diagramme de la figure 7, on pourrait aussi établir une relation de décomposition semblable dans laquelle les facteurs $k_1$ à $k_4$ seraient fonction de l'angle Θ.

Ici encore, pour chacune de ces modulations à 8 états, dans les quatre filtres 16-1 à 16-4 de l'annuleur d'écho, traitant respectivement les signaux $D_1(n)$ à $D_4(n)$ à valeurs $+1$, $-1$ ou 0, les coefficients s'ajustent de façon à produire automatiquement une multiplication de ces signaux d'entrée $D_1(n)$ à $D_4(n)$ par les facteurs $k_1$ à $k_4$ respectivement.

On peut souligner ici, en s'appuyant sur ces exemples, la différence de conception entre l'annuleur d'écho décrit dans le brevet précité n° 2 377 734 et celui de la présente invention. Dans la version la plus proche de la présente invention, on utilise dans l'annuleur d'écho connu, un nombre de filtres correspondant au nombre d'états de phase de la porteuse et, à chaque période de modulation, on applique à l'entrée d'un seul filtre un nombre correspondant à l'amplitude de la porteuse et à l'entrée de tous les autres filtres le nombre 0. Cette conception correspond à un transcodage du type du tableau I avec indépendance instantanée des signaux élémentaires et non pas à un transcodage du type du tableau II où plusieurs filtres peuvent recevoir en même temps des signaux non nuls et où l'indépendance des signaux élémentaires n'est obtenue qu'en moyenne. Mais par ailleurs, l'annuleur d'écho connu ne fournit le même résultat que l'annuleur d'écho de la présente invention utilisant un transcodage du type du tableau I, que dans le cas d'une modulation avec un seul niveau d'amplitude telle que la modulation représentée sur la figure 3. Par contre avec des modulations à plusieurs niveaux d'amplitude, telles que celles représentée sur les figures 4, 5 et 6, on serait obligé dans l'annuleur d'écho connu, de faire effectivement des multiplications par des nombres correspondant à ces niveaux d'amplitude, par exemple des nombres $\pm 1/\sqrt{2}$ dans le cas des modulations représentées par les figures 4 et 6 et des nombres $\pm\sqrt{2}/3$ dans le cas de la modulation représentée par la figure 5. L'annuleur d'écho de la présente invention permet précisément d'éviter de faire effectivement ces multiplications compliquées, de façon à ne faire effectivement dans tous les cas de modulation que des multiplications par des nombres à valeurs $+1$, $-1$ ou $0$.

On va décrire maintenant, à titre d'exemple, deux modes de réalisation d'un annuleur d'écho pour une modulation à 16 états de la porteuse émise, qui est utilisée dans les modems transmettant 9600 bits/S avec une rapidité de modulation de 2400 bauds. Un type de modulation à 16 états utilisé en pratique est représenté sur le diagramme de la figure 8. Les 16 états de modulation de la porteuse émise sont obtenus dans ce cas en formant la somme de deux porteuses en quadrature, modulées chacune en fonction des données par les phases 0 et 180° et par les amplitudes 1 et 3. La voie émission 1 du modem peut alors être réalisée au moyen de deux systèmes de modulation analogues à celui représenté sur la figure 1 et formant respectivement deux porteuses en quadrature modulées en phase et en amplitude. Suivant cette conception, le signal D(n) représentant l'état de modulation de la porteuse émise et à appliquer à l'annuleur d'écho est formé par l'ensemble des signaux représentant l'amplitude et la phase absolue des deux porteuses en quadrature.

La présente invention permet d'éviter d'avoir à effectuer dans l'annuleur d'écho des multiplications par le nombre 3 représentant une amplitude possible des deux porteuses en quadrature. On peut utiliser pour cela un circuit 17 effectuant un transcodage conforme au tableau III et correspondant à une décomposition du signal D(n) en 8 signaux élémentaires $D_1(n)$ à $D_8(n)$.

Tableau III

| D(n) | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ | $A_{14}$ | $A_{15}$ | $A_{16}$ |
|---|---|---|---|---|---|---|---|---|---|---|---|---|---|---|---|---|
| $D_1(n)$ | 1 | 0 | 0 | 0 | 0 | 0 | 0 | 0 | $-1$ | 0 | 0 | 0 | 0 | 0 | 0 | 0 |
| $D_2(n)$ | 0 | 1 | 0 | 0 | 0 | 0 | 0 | 0 | 0 | $-1$ | 0 | 0 | 0 | 0 | 0 | 0 |
| $D_3(n)$ | 0 | 0 | 1 | 0 | 0 | 0 | 0 | 0 | 0 | 0 | $-1$ | 0 | 0 | 0 | 0 | 0 |
| $D_4(n)$ | 0 | 0 | 0 | 1 | 0 | 0 | 0 | 0 | 0 | 0 | 0 | $-1$ | 0 | 0 | 0 | 0 |
| $D_5(n)$ | 0 | 0 | 0 | 0 | 1 | 0 | 0 | 0 | 0 | 0 | 0 | 0 | $-1$ | 0 | 0 | 0 |
| $D_6(n)$ | 0 | 0 | 0 | 0 | 0 | 1 | 0 | 0 | 0 | 0 | 0 | 0 | 0 | $-1$ | 0 | 0 |
| $D_7(n)$ | 0 | 0 | 0 | 0 | 0 | 0 | 1 | 0 | 0 | 0 | 0 | 0 | 0 | 0 | $-1$ | 0 |
| $D_8(n)$ | 0 | 0 | 0 | 0 | 0 | 0 | 0 | 1 | 0 | 0 | 0 | 0 | 0 | 0 | 0 | $-1$ |

Un circuit 17 réalisant le transcodage suivant le tableau III, fournit 8 signaux élémentaires $D_1(n)$ à $D_8(n)$, indépendants de façon instantanée, puisque, pour chaque état de modulation de la porteuse, un seul de ces signaux n'est pas nul. L'annuleur d'écho comporte 8 filtres 16-1 à 16-8, mais il a l'avantage d'avoir un temps de convergence faible.

Suivant un autre mode de réalisation de l'invention on peut aussi effectuer un transcodage conforme au tableau IV et correspondant à une décomposition du signal D(n) en 4 signaux élémentaires $D_1(n)$ à $D_4(n)$.

Tableau IV

| D(n) | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ | $A_{14}$ | $A_{15}$ | $A_{16}$ |
|---|---|---|---|---|---|---|---|---|---|---|---|---|---|---|---|---|
| $D_1(n)$ | 1 | 0 | 0 | 1 | $-1$ | 0 | 0 | $-1$ | $-1$ | 0 | 0 | $-1$ | 1 | 0 | 0 | 1 |
| $D_2(n)$ | 1 | 1 | 0 | 0 | 1 | 1 | 0 | 0 | $-1$ | $-1$ | 0 | 0 | $-1$ | $-1$ | 0 | 0 |
| $D_3(n)$ | 0 | 1 | 1 | 0 | 0 | $-1$ | $-1$ | 0 | 0 | $-1$ | $-1$ | 0 | 0 | 1 | 1 | 0 |
| $D_4(n)$ | 0 | 0 | 1 | 1 | 0 | 0 | 1 | 1 | 0 | 0 | $-1$ | $-1$ | 0 | 0 | $-1$ | $-1$ |

Un circuit 17 réalisant le transcodage suivant le tableau IV fournit 4 signaux $D_1(n)$ à $D_4(n)$ indépendants en moyenne. En effet pour chaque état de modulation, un produit de deux de ces quatre signaux n'est pas nul. Mais pour les 16 états de modulation, 8 de ces produits non nuls valent $+1$, et 8 autres valent $-1$. Comme les 16 états de modulation sont équiprobables, la condition d'indépendance en moyenne exprimée par la formule (5A) est respectée. L'annuleur d'écho ne comporte que 4 filtres 16-1 à 16-4 au prix d'un temps de convergence assez long.

La conception modulaire de l'annuleur d'écho de l'invention offre une possibilité très intéressante lors du fonctionnement du modem à vitesse de transmission réduite, dite vitesse de repli. On sait que lorsque les conditions de transmission sont mauvaises et entraînent, à la vitesse de transmission normale, des erreurs inacceptables à la réception, on adapte l'émetteur du modem pour que les données soient transmises à la vitesse de repli qui est généralement la moitié de la vitesse normale. Un annuleur d'écho associé au modem doit être également adapté à la vitesse de repli. Avec l'annuleur d'écho de l'invention, on peut obtenir de façon très simple des performances accrues, lors du fonctionnement à la vitesse de repli.

On va expliquer cette possibilité dans le cas donné à titre d'exemple d'un modem utilisant pour la vitesse normale de 9600 bits/S une modulation de la porteuse à 16 états, répondant au diagramme de la figure 7. On suppose que lors du fonctionnement à vitesse de repli de 4800 bits/S, les 8 états de la porteuse utilisés sont les états indiqués sur la figure 7 par les points $A_2$, $A_4$, $A_6$, $A_8$, $A_{10}$, $A_{12}$, $A_{14}$ et $A_{16}$. Pour la vitesse normale de 9600 bits/S, l'annuleur d'écho utilise un circuit de transcodage 17 effectuant un transcodage conforme au tableau III et fournissant 8 signaux $D_1(n)$ à $D_8(n)$ qui sont appliqués, comme on l'a déjà indiqué, à l'entrée de 8 filtres 16-1 à 16-8. Lors du fonctionnement à vitesse de repli, on n'utilise pas les 4 signaux $D_1(n)$, $D_3(n)$, $D_5(n)$, $D_7(n)$ et les 4 autres signaux $D_2(n)$, $D_4(n)$, $D_6(n)$, $D_8(n)$ sont obtenus en fonction des 8 états utilisés, comme l'indique le tableau V, qui est un simple extrait du tableau III.

Tableau V

| D(n) | $A_2$ | $A_4$ | $A_6$ | $A_8$ | $A_{10}$ | $A_{12}$ | $A_{14}$ | $A_{16}$ |
|---|---|---|---|---|---|---|---|---|
| $D_2(n)$ | 1 | 0 | 0 | 0 | −1 | 0 | 0 | 0 |
| $D_4(n)$ | 0 | 1 | 0 | 0 | 0 | −1 | 0 | 0 |
| $D_6(n)$ | 0 | 0 | 1 | 0 | 0 | 0 | −1 | 0 |
| $D_8(n)$ | 0 | 0 | 0 | 1 | 0 | 0 | 0 | −1 |

Ces signaux répondent à la condition d'indépendance requise pour l'annuleur d'écho de l'invention. La figure 9 représente la configuration du générateur de signal d'écho synthétique 14 qu'il est avantageux de réaliser lors de fonctionnement en vitesse de repli. Au lieu d'utiliser seulement les filtres 16-2, 16-4, 16-6, 16-8 alimentés par les signaux $D_2(n)$, $D_4(n)$, $D_6(n)$, $D_8(n)$ pour former le signal d'écho synthétique $\hat{e}(n)$, on connecte en série avec ces filtres, les 4 filtres 16-1, 16-3, 16-5, 16-7 utilisés à la vitesse normale pour traiter les signaux $D_1(n)$, $D_3(n)$, $D_5(n)$, $D_7(n)$. La longueur des filtres traitant les 4 signaux fournis par le circuit de transcodage 17 est ainsi doublée et les performances de l'annuleur d'écho en vitesse de repli sont accrues.

A la lumière de différents exemples décrits, l'homme de l'art comprendra aisément qu'il existe pour chaque type de modulation plusieurs transcodages permettant d'obtenir des signaux élémentaires ne prenant que les valeurs $+1$, $-1$ ou 0 et indépendants en moyenne. On peut noter qu'avec des transcodages convenant pour certains types de modulation, on peut obtenir des signaux élémentaires indépendants en moyenne et ne prenant que deux valeurs $+1$ ou $-1$. Enfin dans d'autres cas de modulation on peut être amené à substituer aux nombres $\pm 1$ fournis pour certains états de modulation par le circuit de transcodage, des puissances entières de deux telles que $1/2$, $1/4$, ... etc., ce qui ne complique pratiquement pas les multiplications à réaliser dans les filtres de l'annuleur d'écho.

**Revendications**

1. Annuleur d'écho associé à un modem (1-5) de transmission de données utilisant la modulation de phase et d'amplitude d'une porteuse, cet annuleur d'écho comprenant des filtres adaptatifs (16-1 à 16-p) qui reçoivent des signaux ($D_1(n)$ à $D_p(n)$) déduits du signal (D(n)) de données à transmettre, qui fournissent des signaux ($\hat{e}_1(n)$ à $\hat{e}_p(n)$) qui sont combinés pour former un signal d'écho synthétique ($\hat{e}(t)$) et dont les coefficients ($\vec{C}^1(n)$ à $\vec{C}^p(n)$) sont réglés de façon itérative, à partir du signal de différence entre le signal reçu et le signal d'écho synthétique, pour rendre minimale la valeur quadratique moyenne du signal d'écho résiduel (e(t)) présent dans ledit signal de différence, caractérisé en ce qu'il comporte des moyens de transcodage (17) qui reçoivent un signal (D(n)) caractérisant à chaque intervalle de modulation l'état de phase et d'amplitude de la porteuse à émettre et qui font correspondre aux états possibles distincts de la porteuse à émettre, des configurations distinctes de plusieurs nombres de valeur $+1$, $-1$ ou 0, de façon à former plusieurs signaux élémentaires ($D_1(n)$ à $D_p(n)$) en moyenne indépendants entre eux, ces signaux élémentaires étant appliqués respectivement auxdits filtres adaptatifs (16-1 à 16-p).

2. Annuleur d'écho selon la revendication 1, associé à un modem fournissant une porteuse ayant des paires d'états possibles de phase et d'amplitude correspondant dans chaque paire à la même amplitude et à deux phases différent de 180°, caractérisé en ce que les moyens de transcodage (17) font correspondre à chaque paire d'états deux configurations de nombres ne différant que par le signe.

3. Annuleur d'écho selon l'une des revendications 1 ou 2, caractérisé en ce que lesdits moyens de transcodage (17) sont agencés pour faire correspondre à chaque état possible de phase et d'amplitude de la porteuse une configuration de plusieurs nombres dont un seul a pour module 1, les autres nombres étant nuls (tableaux I et III).

4. Annuleur d'écho selon l'une des revendications 1 ou 2, caractérisé en ce que lesdits moyens de transcodage (17) sont agencés pour faire correspondre aux états possibles distincts de phase et d'amplitude de la porteuse des configurations distinctes de plusieurs nombres de valeur $+1$, $-1$ ou 0, de sorte qu'en formant tous les produits possibles de deux nombres dans chaque configuration, la somme de tous les produits possibles pour toutes les configurations soit nulle (tableaux II et IV).

5. Annuleur d'écho selon l'une des revendications 1 à 4, caractérisé en ce que tous les filtres adaptatifs sont identiques à un filtre de base qui est agencé pour traiter un signal d'entrée $D_i(n)$ prenant aux instants nT la valeur $+1$, $-1$ ou 0, T étant l'intervalle de modulation, les valeurs de sortie $\hat{e}_i(n)$ de ce filtre de base aux instants nT étant calculées suivant l'expression $\hat{e}_i(n) = \sum_{q=0}^{N-1} D_i(n-q)\ C^i_q(n)$, les N coeffi-

cients $C^i_q$ de ce filtre de base étant ajustés suivant la formule de récurrence

$$C^i_q(n+1) = C^i_q(n) + \alpha e(n) \, D_1(n-q),$$

$\alpha$ étant un coefficient petit par rapport à 1, e(n) étant la valeur aux instants nT du signal de différence entre le signal reçu et le signal d'écho synthétique.

6. Annuleur d'écho selon l'une des revendications 1 à 5, associé à un modem fournissant une porteuse ayant un certain nombre d'états possibles distincts de phase et d'amplitude pour le fonctionnement du modem à la vitesse normale et la moitié de ces états pour le fonctionnement à la vitesse de repli, cet annuleur d'écho comportant un circuit de transcodage (17) fournissant, pour le fonctionnement à la vitesse normale, 2P signaux élémentaires ($D_1(n)$ à $D_8(n)$) indépendants en moyenne, qui sont appliqués à 2P filtres adaptatifs (16-1 à 16-8) identiques à un filtre de base, caractérisé en ce que pour le fonctionnement à la vitesse de repli, on utilise P signaux élémentaires ($D_2(n)$, $D_4(n)$, $D_6(n)$, $D_8(n)$) fournis par ledit circuit de transcodage, ces P signaux élémentaires étant choisis pour être indépendants en moyenne et étant appliqués chacun au montage en cascade de deux filtres de base.

**Patentansprüche**

1. Echokompensator für ein Modem (1-5) zur Datenübertragung unter Anwendung von Amplituden- und Phasenmodulation eines Trägers, wobei der Echokompensator Adaptivfilter (16-1 bis 16-p) enthält die von dem zu übertragenden Datensignal (D(n)) abgeleitete Signale ($D_1(n)$ bis $D_p(n)$) empfangen und Signale ($\hat{\epsilon}_1(n)$ bis $\hat{\epsilon}_p(n)$) erzeugen, die zum Bilden eines synthetischen Echosignals ($\hat{e}(t)$) kombiniert werden, wobei die Filterkoeffizienten ($\vec{C}^1(n)$ bis $C^p(n)$) auf iterative Weise eingestellt werden, um ausgehend von dem Differenzsignal zwischen dem empfangenen Signal und dem synthetischen Echosignal den mittleren quadratischen Wert eines Restechosignals (e(t)) in dem genannten Differenzsignal zu minimalisieren, dadurch gekennzeichnet, dass der Echokompensator Kodeumwandlungsmittel (17) enthält, die ein Signal (D(n)) empfangen, das in jedem Modulationsintervall den Amplituden- und Phasenzustand des zu übertragenden Trägers kennzeichnet und die unterschiedliche, den unterschiedlichen möglichen Zuständen des zu übertragenden Trägers entsprechende Konfigurationen mehrerer Zahlen mit den Werten $+1$, $-1$ oder 0 erzeugen so dass mehrere elementare Signale ($D_1(n)$ bis $D_p(n)$) gebildet werden, die im statistischen Mittel unabhängig voneinander sind und die den jeweiligen Adaptivfiltern (16-1 bis 16-p) zugeführt werden.

2. Echokompensator nach Anspruch 1 mit einem Modem, der einen Träger mit Paaren von möglichen Phasen- und Amplitudenzuständen erzeugt, die in jedem Paar der selben Amplitude und zwei um 180° unterschiedlichen Phasen entsprechen, dadurch gekennzeichnet, dass die genannten Kodeumwandlungsmittel (17) für jedes Paar von Zuständen zwei Zahlenkonfigurationen bilden, die nur in ihrem Vorzeichen voneinander abweichen.

3. Echokompensator nach Anspruch 1 oder 2, dadurch gekennzeichnet, dass die genannten Kodeumwandlungsmittel (17) angeordnet sind, um für jeden möglichen Phasen- und Amplitudenzustand des Trägers eine Konfiguration mehrerer Zahlen zu erzeugen wobei eine einzige Zahl einen Modulus 1 hat und die anderen Zahlen Null sind (Tafeln I und III).

4. Echokompensator nach Anspruch 1 oder 2, dadurch gekennzeichnet, dass die genannten Kodeumwandlungsmittel (17) angeordnet sind, um unterschiedliche, den unterschiedlichen möglichen Phasen- und Amplitudenzuständen des Trägers entsprechende Konfigurationen mehrerer Zahlen von Werten $+1$, $-1$ oder 0 derart zu erzeugen, dass bei der Bildung aller möglichen Produkte von zwei Zahlen in jeder Konfiguration die Summe aller möglichen Produkte für alle Konfigurationen Null ist (Tafeln II und IV).

5. Echokompensator nach einem der Ansprüche 1 bis 4, dadurch gekennzeichnet, dass alle Adaptivfilter einem Basisfilter entsprechen, das angeordnet ist zum Verarbeiten eines Eingangssignals $D_i(n)$, das zu den Zeitpunkten nT, den Wert $+1$, $-1$ oder 0 annimmt, wobei T das Modulationsintervall ist, und die Ausgangswerte $\hat{\epsilon}_i(n)$ dieses Basisfilters zu den Zeitpunkten nT entsprechend dem folgenden Ausdruck berechnet werden:

$$\hat{\epsilon}_i(n) = \sum_{q=0}^{N-1} D_{i1}(n-q) \, C^i_q(n),$$

wobei die N Koeffizienten $C^i_q$ dieses Basisfilters entsprechend der folgenden Rekursionsformel eingestellt werden:

$$C^i_q(n+1) = C^i_q(n) + \alpha e(n) \, D_i(n-q),$$

worin $\alpha$ ein Koeffizient mit einem in bezug auf 1 kleinen Wert und e(n) der Wert des Differenzsignals zwischen dem empfangenen Signal und dem synthetischen Echosignal zu den Zeitpunkten nT ist.

6. Echokompensator nach einem der Ansprüche 1 bis 5 mit einem Modem, das einen Träger erzeugt mit einer vorbestimmten Anzahl unterschiedlicher Phasen- und Amplitudenzustände zum Arbeiten des Modems mit normaler Geschwindigkeit und mit der Hälfte dieser Zustände zum Arbeiten mit einer niedrigeren Rückfallgeschwindigkeit, wobei der genannte Echokompensator eine Kodeumwandlungsschaltung (17) enthält, die zum Arbeiten mit der genannten normalen Geschwindigkeit 2P Elementarsignale ($D_1(n)$ bis $D_8(n)$) erzeugt, die im statistischen Mittel unabhängig voneinander sind und 2P einem Basisfilter entsprechenden Adaptivfiltern (16-1 bis 16-8) zugeführt werden, dadurch gekennzeichnet, dass zum Arbeiten mit der genannten Rückfallgeschwindigkeit P der von der genannten Kodeumwandlungsschaltung erzeugten Elementarsignale ($D_2(n)$, $D_4(n)$, $D_6(n)$, $D_8(n)$) benutzt werden, wobei diese P Elementarsignale derart gewählt worden sind, dass sie im statistischen Mittel unabhängig voneinander sind und je der Reihenschaltung von zwei Basisfiltern zugeführt werden.

**Claims**

1. An echo canceler associated with a data transmission modem (1-5) utilizing amplitude and phase modulation of a carrier, the echo canceler comprising adaptive filters (16-1 to 16-p) receiving signals ($D_1(n)$ to $D_p(n)$) derived from the data signal ($D(n)$) to be transmitted and producing signals ($\hat{\epsilon}_1(n)$ to $\hat{\epsilon}_p(n)$) which are combined for forming a synthetic echo signal ($\epsilon(t)$), the filter coefficients ($\overline{C^1}(n)$ to $\overline{C^p}(n)$) being adjusted in an iterative manner in order to minimize, starting from the difference signal between a received signal and the synthetic echo signal, the mean square value of a residual echo signal ($e(t)$) present in said difference signal, characterized in that the echo canceler comprises code conversion means (17) which receive a signal ($D(n)$) characterizing in each modulation interval the amplitude and phase state of the carrier to be transmitted and which produce distinct configurations of several numbers of values $+1$, $-1$ or $0$, said distinct configurations corresponding with the distinct possible states of the carrier to be transmitted so as to form several elementary signals ($D_1(n)$ to $D_p(n)$) which are mutually independent in the mean, these elementary signals being applied to the respective adaptive filters (16-1 to 16-p).

2. An echo canceler as claimed in claim 1 associated with a modem producing a carrier having pairs of possible phase and amplitude states corresponding to the same amplitude and to two phases differing by 180°, characterized in that said code conversion means (17) cause two number configurations which only differ as to their sign to correspond to each pair of states.

3. An echo canceler as claimed in claim 1 or 2, characterized in that said conversion means (17) are arranged to cause a configuration of several numbers, one number of which has a modulus 1 and the other numbers are zero, to correspond to each possible phase and amplitude state of the carrier (Tables I and III).

4. An echo canceler as claimed in claim 1 or 2, characterized in that said code conversion means (17) are arranged to cause distinct configurations of several numbers of values $+1$, $-1$ or $0$ to correspond to the distinct possible phase and amplitude states of the carrier in a manner such that upon forming all possible products of two numbers in each configuration the sum of all possible products for all configurations is zero (Tables II and IV).

5. An echo canceler as claimed in any of the claims 1 to 4, characterized in that all adaptive filters are identical to a base filter arranged for processing an input signal $D_i(n)$ which assumes the value $+1$, $-1$ or $0$ at the instants $nT$, where $T$ is the modulation interval, the output values $\hat{\epsilon}_i(n)$ of this base filter at the instants $nT$ being calculated in accordance with the expression

$$\hat{\epsilon}_i(n) = \sum_{q=0}^{N-1} D_i(n-q)\, C^i_q(n),$$

in which the N coefficients $C^i_q$ of this base filter are adjusted in accordance with the recursion formula

$$C^i_q(n+1) = D^1_q(n) + \alpha e(n)\, D_i(n-1),$$

where $\alpha$ is a coefficient small with respect to 1 and $e(n)$ is the value of the difference signal between the received signal and the synthetic echo signal at the instants $nT$.

6. An echo canceler as claimed in any of the claims 1 to 5, associated with a modem producing a carrier having a predetermined number of different phase and amplitude states for functioning of the modem at a normal rate and half of these states for functioning at a lower fall-back rate, said echo canceler comprising a code conversion circuit (17) which, for functioning at said normal rate, produces 2P elementary signals ($D_1(n)$ to $D_8(n)$) which are mutually independent in the mean and are applied to 2P adaptive filters (16-1 to 16-8) identical to a base filter, characterized in that for functioning at said fall-back rate, P of said 2P elementary signals ($D_2(n)$, $D_4(n)$, $D_6(n)$, $D_8(n)$) produced by said code conversion circuit are used, these P elementary signals having been chosen such that they are independent in the mean and are each applied to the cascade connection of two base filters.

FIG.1

FIG.2

0 033 568

FIG.3

FIG.4

FIG.6

FIG.7

FIG.5

19

FIG.8

FIG.9